# FASCICULE DE BREVET EUROPEEN

(11) **EP 3 021 989 B1**
(45) Date de publication et mention de la délivrance du brevet: **28.06.2017**
(21) Numéro de dépôt: 14749916.4
(22) Date de dépôt: 08.07.2014
(51) Int. Cl.: B08B 9/032, F24H 1/00, F24H 8/00, B64D 11/04, B64F 5/00

(54) **DISPOSITIF DE NETTOYAGE DES CANALISATIONS DU RÉSEAU D'EAU POTABLE D'UN AÉRONEF**
VORRICHTUNG ZUM REINIGEN DER ROHRLEITUNGEN DES TRINKWASSERKREISLAUFS EINES FLUGZEUGS
DEVICE FOR CLEANING THE PIPES OF THE DRINKING WATER CIRCUIT OF AN AIRCRAFT

(30) Priorité: 19.07.2013 FR 1357155
(43) Date de publication de la demande: 25.05.2016
(73) Titulaire: Prodose, 31660 Bessieres (FR)
(72) Inventeur: BOUKARI, Morou, F-31300 Toulouse (FR)
(74) Mandataire: Richebourg, Michel François
(86) Numéro de dépôt international: PCT/FR2014/051752
(87) Numéro de publication internationale: WO 2015/007977

(56) Documents cités:
- WO-A2-2010/142924
- CA-A1- 1 209 868
- DE-U1-202005 012 380

## Description

### DOMAINE D'APPLICATION DE L'INVENTION

La présente invention a trait au domaine des aéronefs et notamment aux adaptations permettant de réaliser dans les meilleures conditions le nettoyage des canalisations du réseau d'eau potable d'un aéronef.

### DESCRIPTION DE L'ART ANTÉRIEUR

Il existe dans l'art antérieur des procédés de traitement du circuit d'eau potable d'un aéronef qui proposent de faire circuler dans ledit réseau, un liquide et notamment de l'eau, à haute température.
Ainsi par exemple, le document WO 2010/14924, qui est considéré comme l'état de la technique le plus proche de la revendication 1 propose un dispositif de traitement du circuit d'eau potable d'un aéronef, ledit circuit étant du type de celui comprenant au moins un réservoir de stockage, une pluralité de canalisations proposant une pluralité de points d'entrée et de sortie de l'eau, et des moyens de filtration comprenant des cartouches de filtration démontables équipant certaines canalisations, remarquable en ce qu'il consiste
- à ne pas retirer les cartouches de filtration,
- à remplir ledit réservoir au moyen d'un liquide de traitement,
- à faire circuler ledit liquide de traitement qui est de l'eau amenée à haute température, dans le circuit avec les cartouches installées.
Un autre document WO 2012/168645 propose un procédé de nettoyage dynamique des conduites d'alimentation en eau potable d'un véhicule, consistant à créer une onde de choc dans la conduite à nettoyer, remarquable en ce qu'il consiste :
- à remplir partiellement un volume par un liquide,
- à remplir le volume non occupé par le liquide, par du gaz sous pression,
- à libérer le liquide à travers un étranglement communiquant avec l'extrémité de la ou desdites conduites à nettoyer dont l'autre extrémité est ouverte tout en maintenant la pression, de façon :
- à créer un déplacement accéléré du liquide dans un premier temps et du mélange de gaz et de liquide se créant dans un deuxième temps puis,
- à générer une onde de choc, une fois le volume vidé, onde de choc qui se propage à travers le mélange.
Selon un mode de réalisation, ledit liquide est de l'eau portée à haute température.

Il est également connu dans l'art antérieur, la technologie de chaudière à gaz à condensation telle celle décrite dans une application fixe pour le chauffage de l'eau d'une piscine dans le document DE 20 2005012380.

### DESCRIPTION DE L'INVENTION

La demanderesse a mené des recherches sur un dispositif de production de liquide chaud permettant de mettre en oeuvre non seulement les procédés décrits ci-dessus mais également tout procédé de nettoyage susceptible d'utiliser un liquide chaud. Pour ce faire, la demanderesse a identifié plusieurs critères, dont les suivants :
- le liquide doit pouvoir être porté à haute température très rapidement,
- le volume de liquide porté à haute température doit être important,
- le débit de liquide doit également être important,
- le dispositif doit présenter un volume autorisant son transport en avion,
- le dispositif doit pouvoir être exploité dans l'atelier où se trouve l'avion à traiter et à proximité de ce dernier,
- le dispositif doit pouvoir se déplacer dans l'atelier où se trouve l'avion à traiter.

Ces recherches ont abouti à la conception et à la réalisation d'un dispositif de nettoyage des canalisations du réseau d'eau potable d'un aéronef, selon la revendication 1. L'utilisation de ce type de chaudière à condensation est particulièrement originale dans le cas d'un dispositif mobile car il s'agit d'un équipement classiquement fixe.
Malgré cela, la demanderesse propose d'exploiter une telle technologie en ce qu'elle propose la puissance nécessaire à la mise en température rapide d'un grand volume de liquide susceptible de circuler à haut débit.
Une autre caractéristique particulièrement avantageuse de cette chaudière réside dans le fait que les gaz d'échappement qu'elle produit ont une faible température ce qui autorise son utilisation dans un hangar fermé à proximité d'un aéronef. En effet, les autres technologies sont susceptibles de produire des gaz de fumées à des températures très élevées les empêchant d'être exploitées dans un atelier aéronautique ou à proximité

Une telle technologie de chaudière est particulièrement avantageuse en ce qu'elle autorise le réglage du débit ainsi que le réglage du régime de la chaudière. Il est alors possible d'assurer le chauffage de l'eau à des fins de traitement d'un circuit d'eau potable sur plusieurs types d'aéronefs.

Selon une caractéristique particulièrement avantageuse, ledit liquide est de l'eau.

Étant donnée la nécessité d'une configuration mobile et l'utilisation d'une exploitation en atelier aéronautique, l'alimentation en gaz doit être portable par bouteilles. Les normes exigeant que chaque bouteille ne dépasse pas un certain volume, le dispositif est remarquable en ce qu'il accueille plusieurs bouteilles de gaz proposant un volume de gaz suffisant susceptible de fournir l'énergie nécessaire à la production d'un grosse quantité de chaleur sur une période très courte.

La présence de plusieurs bouteilles de gaz requérant plusieurs détendeurs et l'exigence par la chaudière d'une alimentation constante d'une grande quantité de gaz peuvent avoir des conséquences négatives pour le dispositif, par exemple :
- un décalage dans la détente,
- un givrage des canalisations,
- la présence d'eau de condensation dans les canalisations,
- un volume de gaz pas toujours disponible lorsque la chaudière en a besoin.

Afin de remédier à cet inconvénient, la demanderesse a avantageusement conçu un réservoir intermédiaire de gaz se positionnant entre la chaudière et le ou les détendeurs associés à une ou plusieurs bouteilles de gaz pour recevoir le gaz venant d'être détendu et pour alimenter la chaudière. Lorsqu'il y a plusieurs bouteilles, ce réservoir reçoit ainsi le gaz détendu issu de chaque bouteille et en assure le mélange pour plus d'homogénéité. Il crée de plus un volume de gaz toujours disponible quels que soient les régimes de la chaudière. Il assure enfin la décantation de la condensation créée par la détente.

Ces caractéristiques permettent d'exploiter dans les meilleures conditions une chaudière à gaz à foyer fermé à condensation et permet même de la sur-dimensionner afin de pouvoir exploiter le dispositif quel que soit le gabarit de l'avion.

Selon une première solution de mise en oeuvre, la chaudière assure le chauffage d'un liquide dans un circuit primaire venant échanger sa chaleur avec un liquide situé dans un ballon.

Dans une deuxième solution, la chaudière assure le chauffage d'un liquide dans un circuit primaire qui vient échanger avec un circuit secondaire à l'intérieur d'un échangeur.

Dans une troisième solution, le liquide du circuit secondaire est préchauffé au moyen du liquide du circuit primaire sortant de l'échangeur avant passage du liquide du circuit secondaire dans l'échangeur.

L'évacuation et l'alimentation en air de cette chaudière ont également été particulièrement étudiées notamment pour répondre aux contraintes de compacité et d'exploitation à l'intérieur d'un atelier aéronautique. Ainsi, selon une autre caractéristique, ladite chaudière est équipée d'une cheminée d'évacuation à double flux autorisant à la fois la sortie de l'échappement et l'entrée d'air frais.

Selon une autre caractéristique particulièrement avantageuse de l'invention, le dispositif comprend en outre un module de dosage d'un produit de traitement qui est injecté dans le liquide chauffé en sortie de dispositif avant son introduction dans le réseau d'eau potable de l'aéronef.

Selon une autre caractéristique particulièrement avantageuse de l'invention, le dispositif comprend un module de connexion au réseau d'eau potable de l'aéronef équipé d'une vanne dont la sélection de la position permet :
- de purger l'eau ou le liquide présent dans le réseau d'eau potable de l'aéronef,
- d'arrêter l'injection de liquide chaud sans créer de vide d'air,
- de purger le liquide présent dans le dispositif sans l'envoyer dans l'aéronef.

Lorsque il est alimenté par le réseau d'eau domestique, le dispositif comprend en outre un module d'accélération de l'eau issue du réseau domestique afin d'augmenter la vitesse de remplissage du réseau de l'aéronef. Ce sont les moyens de mise en pression de l'aéronef qui assurent la purge du réseau une fois son ou ses réservoirs remplis d'eau chaude.

Le dispositif comporte en outre un châssis mobile réunissant sur un très petit volume, les différents modules fonctionnels ci-dessus décrits. En effet, afin de pouvoir passer en soute à bagages d'un avion transportant des passagers, le poids du dispositif est inférieur à 200 kilogrammes et présente une hauteur inférieure ou égale à 1,10 m. Les choix fonctionnels et structurels décrits plus haut répondent à ce souci de compacité. Ce châssis mobile est équipé de roulettes amortissantes. De plus, les modules fonctionnels sont fixés au châssis avec des moyens d'amortissement de vibrations, les côtes sont calculées pour prévoir des jeux de dilatation et les matériaux utilisés sont résistants à la haute température.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, plusieurs modes de réalisation d'un dispositif conforme à l'invention.

### BRÈVE DESCRIPTION DES DESSINS

La figure 1 est un dessin schématique d'un dispositif venant se connecter au réseau d'eau potable d'un aéronef;
La figure 2 est un schéma fonctionnel d'un premier mode de réalisation;
La figure 3 est un schéma fonctionnel d'un deuxième mode de réalisation;
La figure 4 est un schéma fonctionnel d'un troisième mode de réalisation;
La figure 5 est un dessin schématique d'une vue en perspective arrière du deuxième mode de réalisation du dispositif sans ses parois d'habillage;
La figure 6 est un dessin schématique d'une vue en perspective avant du dispositif de la figure 5;
La figure 7 est un dessin schématique d'une vue extérieure de face du réservoir intermédiaire,
La figure 8 est un schéma fonctionnel du module de connexion.

### DESCRIPTION DES MODES DE RÉALISATION PRÉFÉRÉS

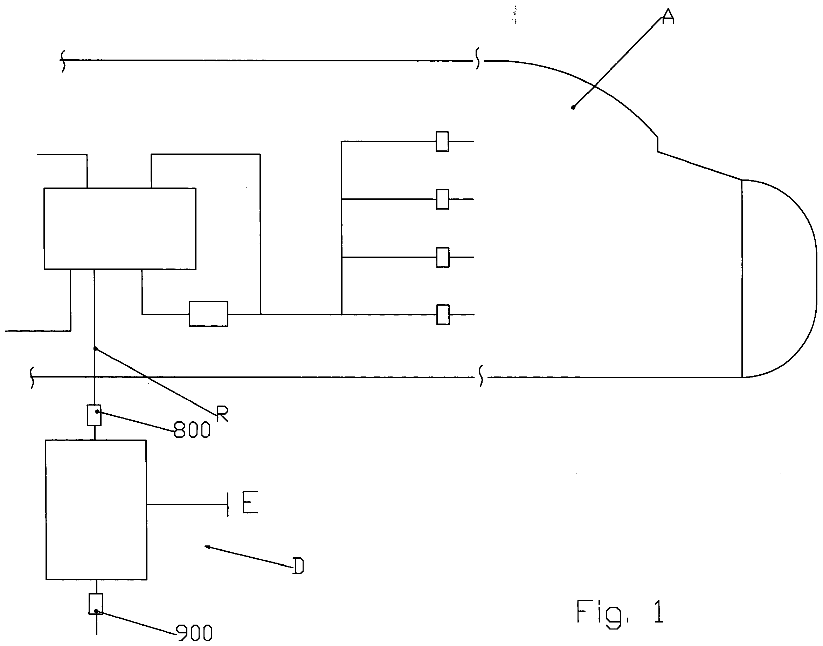

Comme illustré par le dessin de la figure 1, le dispositif D de l'invention est un dispositif de production d'eau chaude à des fins de traitement du réseau R de canalisations d'eau potable d'un aéronef A. Ce dispositif D, indépendant dudit aéronef A, comprend un châssis mobile pour être déplacé dans un atelier et vient se connecter audit réseau R de manière ponctuelle c'est à dire seulement lors de l'opération de maintenance de l'aéronef A qui comprend le traitement dudit réseau. Ce dispositif D est alimenté en eau par le réseau domestique S disponible dans l'atelier. De plus, il est relié au réseau électrique E.

Un tel dispositif doit assurer une production d'eau chaude sur la base d'un débit de 1000 litres à l'heure. Selon le gabarit de l'avion A et le nombre de phases dans le procédé de traitement, le débit, le nombre de milliers de litres d'eau et le nombre d'heures de l'opération peuvent varier.

La description qui suit du dispositif est commune aux différents modes de réalisation illustrés.

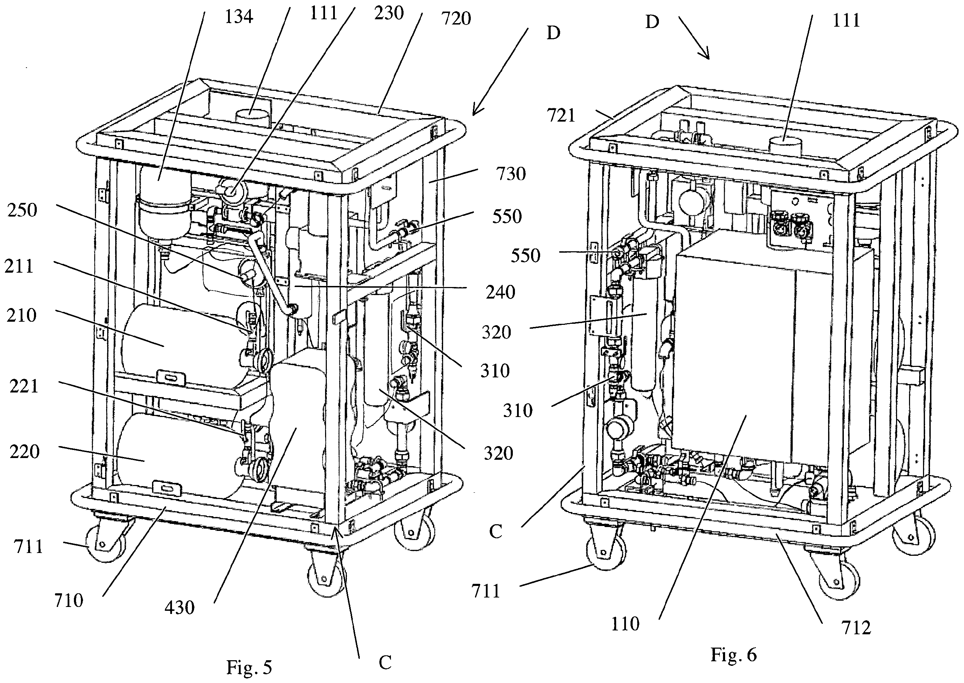

Le dispositif D comprend sur un même châssis mobile C (cf. figure 5) une pluralité de sous-ensembles fonctionnels nécessaires à la production rapide et en grand volume d'eau chaude.

Pour ce faire, le dispositif comprend un sous-ensemble de chauffage 100 comprenant une chaudière à gaz à foyer fermé à condensation 110. Cette chaudière 110 est alimentée via une conduite 120 par un sous-ensemble d'alimentation en gaz 200.

Ce sous-ensemble d'alimentation en gaz 200 accueille deux bouteilles de gaz 210 et 220 chacune associée à une vanne 211 et 221 amenant le gaz à un détendeur 230.

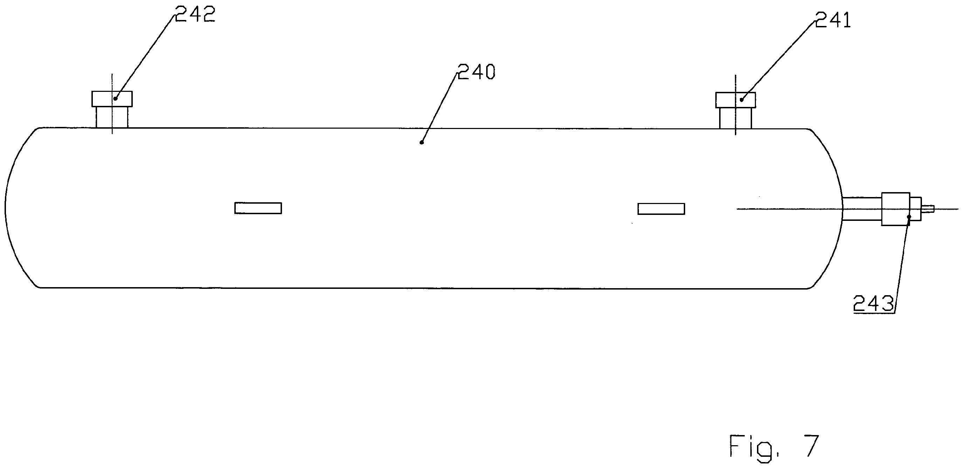

Une caractéristique particulièrement avantageuse de l'invention réside dans la présence d'un réservoir intermédiaire de gaz 240 alimenté par le gaz passant par le détendeur 230 et venant alimenter la chaudière 110 par l'intermédiaire d'un régulateur de débit 250. En se positionnant entre la chaudière 110 et le détendeur 230 associé aux bouteilles 210 et 220, ce réservoir 240 sert de réservoir tampon garantissant un bon mélange du gaz et un volume de gaz constamment disponible pour la chaudière 110 quel que soit son régime. Comme illustré par le dessin de la figure 7, le réservoir 240 se présente sous une forme sensiblement cylindrique présentant un orifice de sortie inférieur 241 et un orifice d'entrée 242 supérieur pour le gaz. Il présente en outre un orifice de décantation 243 des gouttelettes d'eau de condensation présentes dans le réservoir 240. Pour assumer cette fonction, ledit réservoir 240 est positionné verticalement comme illustré sur le dessin de la figure 5. En outre, selon une autre caractéristique particulièrement avantageuse, ce réservoir 240 est accolé à un tuyau d'eau chaude permettant d'augmenter l'écart de température conduisant à la condensation.

La chaudière 110 assure le chauffage d'une eau circulant dans un circuit dit primaire 130 au moyen d'une pompe 131. La pression est surveillée par une jauge 132 et la température est surveillée par un capteur 133. Ce circuit primaire 130 comprend en outre un ballon de compensation 134, une purge 135 ainsi qu'une soupape de sécurité 136. Ce circuit primaire 130 va échanger sa chaleur afin d'assurer le chauffage de l'eau à injecter dans le circuit R de l'aéronef A.

L'eau de ce circuit primaire 130 mais également l'eau à chauffer viennent de la même source S et passent par un sous-ensemble d'alimentation en eau 300. Ce sous-ensemble est branché sur le réseau S et comprend une valve d'entrée 310 autorisant ou non le passage de l'eau du réseau S à travers un filtre 320. Le volume d'eau sortant du filtre 320 est mesuré par un compteur 330. Une valve 340 commande l'alimentation du circuit primaire 130. Une valve 350 commande l'alimentation en eau à chauffer.
Cette eau à chauffer échange avec le circuit d'eau primaire 130 dans le sous-ensemble d'échange 400.
L'eau de traitement ainsi chauffée débouche dans un sous-ensemble de sortie 500 qui comprend une valve d'entrée 510 autorisant au non le passage de l'eau de traitement dans un compteur 520. La température de l'eau est surveillée par une jauge 530. Entre le compteur 520 et la jauge 530, un module d'injection 540 de produit de traitement vient amender l'eau chauffée à des fins d'optimisation du traitement. Ce dernier est asservi avec le compteur 520.
Une dernière valve 550 vient commander la sortie de l'eau de traitement avant sont injection dans le circuit R.

Un sous-ensemble de commande 600 assure la gestion du régime de la chaudière et de l'injection du produit de traitement en fonction des besoins et des informations issus des différents capteurs et jauges. Une grande souplesse dans la gestion dudit régime est rendue possible grâce à la présence du réservoir tampon 240 ci-dessus décrit.

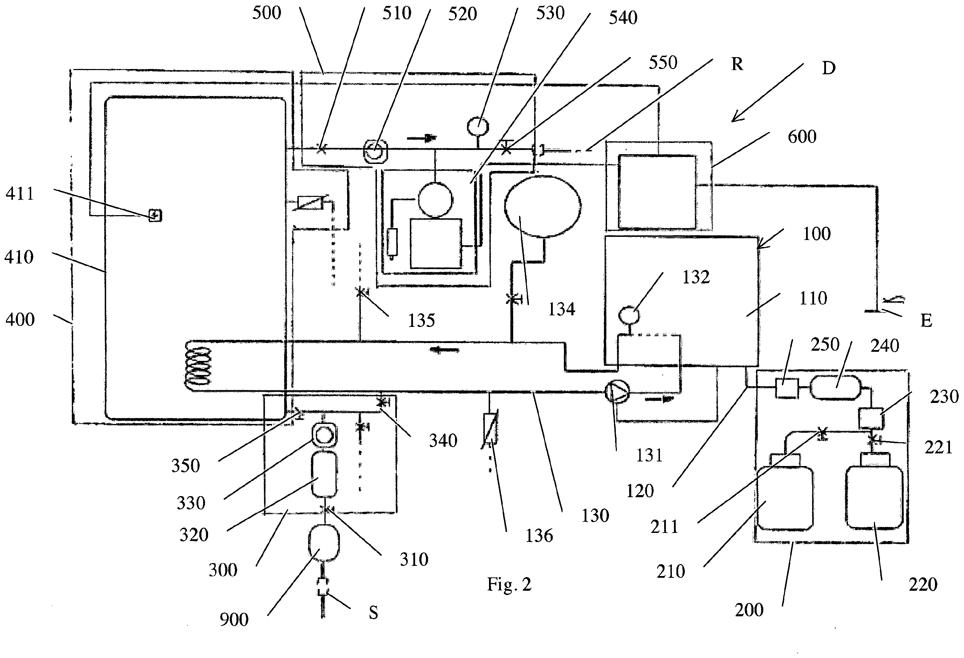

Le technologie d'échange thermique entre le circuit primaire 130 et l'eau de traitement peut différer selon les modes de réalisation illustrés par les dessins des figures 2, 3 et 4.

Selon le mode de réalisation illustré par le dessin de la figure 2, le sous-ensemble d'échange 400 est constitué par un ballon d'eau 410 dans lequel vient circuler au moyen d'un serpentin le circuit primaire. Un capteur de température 411 surveille la température atteinte. Une valve de pression de sécurité 412 équipe le ballon.

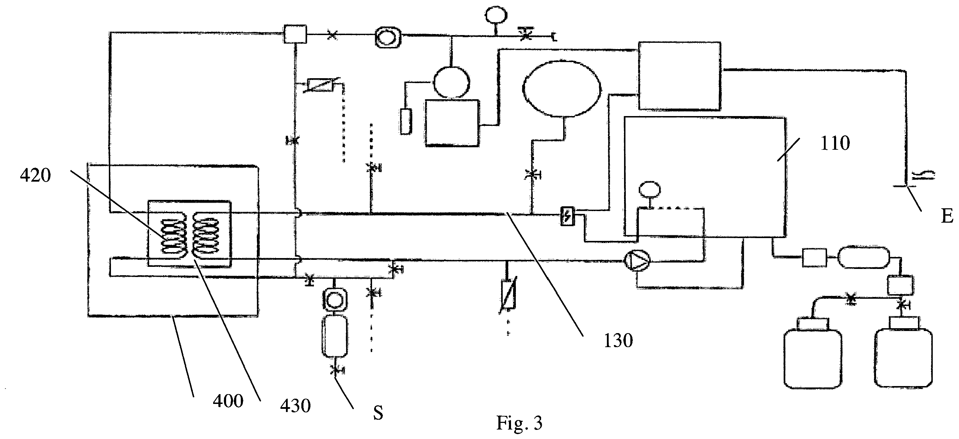

Selon le mode de réalisation illustré par le dessin de la figure 3, la chaudière 100 assure le chauffage d'un liquide dans un circuit primaire 130 qui vient échanger avec un circuit secondaire 420 à l'intérieur d'un échangeur 430.

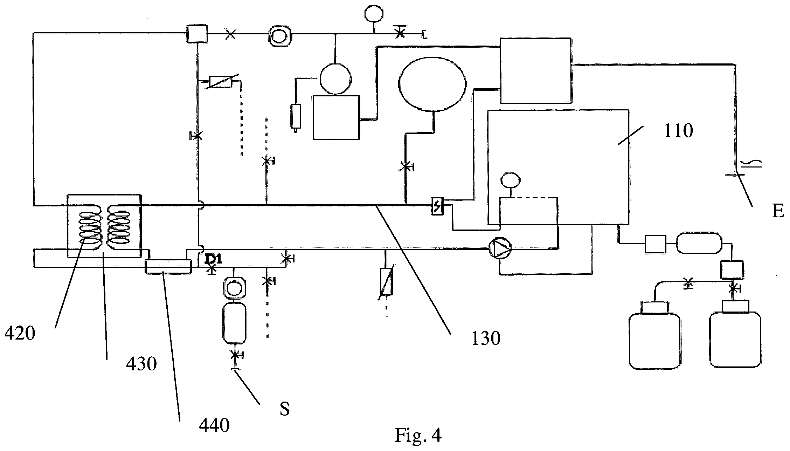

Selon le mode de réalisation illustré par le dessin de la figure 4, l'eau du circuit secondaire 420 est préchauffée au moyen de l'eau du circuit primaire sortant de l'échangeur 430 avant de retourner vers la chaudière 110 au niveau d'un autre échangeur 440.

Les différents sous-ensemble fonctionnels ou la plupart de leurs éléments constitutifs se retrouvent sur les dessins des figures 5 et 6 qui illustrent néanmoins plus particulièrement le deuxième mode de réalisation. Les dessins de ces figures illustrent la compacité du dispositif D. Ils illustrent notamment la compacité de la cheminée 111 équipant la chaudière 110 et qui est une cheminée d'évacuation à double flux. Le châssis C consiste en un ensemble de profilés 700 formant un parallélépipède comprenant deux cadres horizontaux 710 et 720 reliés par des montants 730. Le cadre inférieur 710 accueille sur sa face inférieure des roulettes 711 en contact avec le sol. Cet ensemble de profilés 700 définit un volume intérieur accueillant les différents sous-ensembles fonctionnels du dispositif D. Ces faces verticales sont protégées par des parois d'habillage non illustrées. Les cadres 710 et 720 sont chacun protégés par un tube de protection 712 et 721 évitant tout choc direct au châssis C.

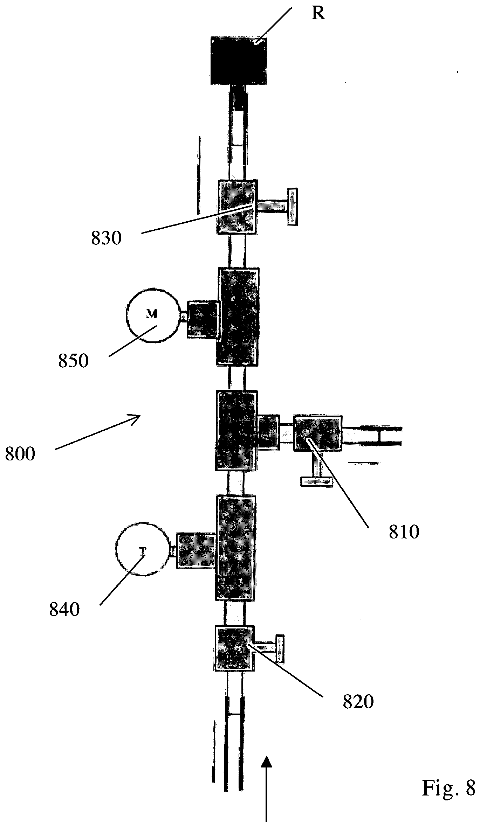

Comme illustré par les seuls dessins des figures 1 et 8, un module de connexion 800 vient s'intercaler entre le dispositif D et le réseau R d'eau potable de l'aéronef A. Ce dispositif est entre autre équipé d'une vanne 810 dont la sélection de la position permet
- de purger l'eau déjà présente dans le réseau,
- d'arrêter l'injection d'eau chaude sans créer de vide d'air,
- purger de l'eau déjà présente dans le dispositif.
Ce module de connexion comprend également des vannes d'entrée 820 et de sortie 830 ainsi qu'une jauge de température 840 et une jauge de pression 850.
Comme illustré par les seuls dessins des figures 1 et 2, un groupe auxiliaire comprenant un moyen d'accélération (par exemple une pompe équipée d'un surpresseur) du débit de l'eau issue du réseau domestique S vient en amont assurer une alimentation du dispositif D lui permettent de réaliser un remplissage accéléré du réseau R d'eau potable de l'aéronef.
Les moyens de mise en pression de d'eau équipant l'aéronef assurent eux-mêmes une fois le réservoir de l'aéronef rempli, le passage de l'eau chaude dans les diverses canalisations à des fins de nettoyage.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention telle que décrite par les revendications.

## Revendications

1. Dispositif (D) de nettoyage des canalisations du réseau (R) d'eau potable d'un aéronef (A),
ledit dispositif (D) étant indépendant dudit aéronef (A) et venant se connecter audit réseau (R) de manière ponctuelle et étant alimenté en liquide,
le dispositif comprenant une pluralité de sous-ensembles fonctionnels nécessaires à la production d'un liquide chaud, ainsi qu' un châssis mobile (C) supportant une chaudière à gaz à foyer fermé à condensation (110), ledit dispositif accueillant plusieurs bouteilles de gaz (210, 220) proposant un volume de gaz suffisant susceptible de fournir l'énergie nécessaire à la production d'une grosse quantité de chaleur sur une période très courte.

2. Dispositif (D) selon la revendication 1, **CARACTÉRISÉ PAR LE FAIT QU'**il comprend un réservoir intermédiaire (240) de gaz se positionnant entre la chaudière (110) et le ou les détendeurs (230) associés aux bouteilles de gaz, pour recevoir le gaz venant d'être détendu et pour alimenter la chaudière (110).

3. Dispositif (D) selon la revendication 1, **CARACTÉRISÉ PAR LE FAIT QUE** la chaudière (110) assure le chauffage d'un liquide dans un circuit primaire (130) venant échanger sa chaleur avec un liquide situé dans un ballon (410).

4. Dispositif (D) selon la revendication 1, **CARACTÉRISÉ PAR LE FAIT QUE** la chaudière (110) assure le chauffage d'un liquide dans un circuit primaire (130) qui vient échanger avec un circuit secondaire (420) à l'intérieur d'un échangeur (430).

5. Dispositif (D) selon la revendication 4, **CARACTÉRISÉ PAR LE FAIT QUE** le liquide du circuit secondaire (420) est préchauffé au moyen du liquide du circuit primaire (130) sortant de l'échangeur (430).

6. Dispositif (D) selon la revendication 1, **CARACTÉRISÉ PAR LE FAIT QUE** ladite chaudière (110) est équipée d'une cheminée (111) d'évacuation à double flux.

7. Dispositif (D) selon la revendication 1, **CARACTÉRISÉ PAR LE FAIT QU'**il comprend un module de dosage (540) d'un produit de traitement qui est injecté dans le liquide chauffé en sortie de dispositif (D) avant son introduction dans le réseau (R) d'eau potable de l'aéronef (A).

8. Dispositif (D) selon la revendication 1, **CARACTÉRISÉ PAR LE FAIT Qu'**il comprend un module de connexion (800) au réseau d'eau potable de l'aéronef (A) équipé d'une vanne (810) dont la sélection de la position permet :
- de purger l'eau ou le liquide présent dans le réseau (R) de l'aéronef (A),
- d'arrêter l'injection le liquide chaud sans créer de vide d'air,
- de purger le liquide déjà présent dans le dispositif (D),
ce module de connexion comprenant également des vannes d'entrée (820) et de sortie (830) ainsi qu'une jauge de température (840) et une jauge de pression (850).

9. Dispositif (D) selon la revendication 1, **CARACTÉRISÉ PAR LE FAIT Qu'**il comprend un châssis mobile (C) équipé de roulettes amortissantes (711).

10. Dispositif (D) selon la revendication 1 et alimenté par le réseau d'eau domestique, **CARACTÉRISÉ PAR LE FAIT Qu'**il comprend un module d'accélération (900) de l'eau issue du réseau domestique afin d'augmenter la vitesse de remplissage du réseau (R) de l'aéronef (A).

## Patentansprüche

1. Vorrichtung (D) zum Reinigen der Kanalisationen des Trinkwassernetzes (R) eines Flugzeugs (A),
wobei die Vorrichtung (D) unabhängig vom Flugzeug (A) ist und an das Netz (R) auf punktuelle Weise verbunden und mit Flüssigkeit versorgt wird,
wobei die Vorrichtung eine Vielzahl von funktionellen Untereinheiten umfasst, die zur Herstellung einer heißen Flüssigkeit erforderlich sind, ebenso wie einen beweglichen Rahmen (C), der einen Gaskondensationskessel (110) mit geschlossenem Feuerraum stützt, wobei die Vorrichtung mehrere Gasflaschen (210, 220) aufnimmt, die ein ausreichendes Gasvolumen darstellen, das die erforderliche Energie liefern kann, die für die Herstellung einer großen Menge Hitze während eines sehr kurzen Zeitraums erforderlich ist.

2. Vorrichtung (D) nach Anspruch 1, **dadurch gekennzeichnet, dass** sie einen Zwischengasbehälter (240) umfasst, der zwischen dem Kessel (110) und dem oder den Reduzierventil(en) (230) positioniert ist, das/die mit den Gasflaschen assoziiert sind, um das Gas zu enthalten, das reduziert wurde, und um den Kessel (110) zu versorgen.

3. Vorrichtung (D) nach Anspruch 1, **dadurch gekennzeichnet, dass** der Kessel (110) die Erhitzung einer Flüssigkeit in einem primären Kreislauf (130) sicherstellt, der seine Hitze mit einer Flüssigkeit tauscht, die sich in einem Kolben (410) befindet.

4. Vorrichtung (D) nach Anspruch 1, **dadurch gekennzeichnet, dass** der Kessel (110) die Erhitzung einer Flüssigkeit in einem primären Kreislauf (130) sicherstellt, der mit einem sekundären Kreislauf (420) im Inneren eines Tauschers (430) tauscht.

5. Vorrichtung (D) nach Anspruch 4, **dadurch gekennzeichnet, dass** die Flüssigkeit des sekundären Kreislaufs (420) mit Hilfe der Flüssigkeit des primären Kreislaufs (130), die aus dem Tauscher (430) austritt, vorerhitzt wird.

6. Vorrichtung (D) nach Anspruch 1, **dadurch gekennzeichnet, dass** der Kessel (110) mit einem Ableitungskamin (111) mit doppeltem Fluss ausgestattet ist.

7. Vorrichtung (D) nach Anspruch 1, **dadurch gekennzeichnet, dass** sie ein Dosiermodul (540) eines Behandlungsprodukts umfasst, das in die erhitzte Flüssigkeit am Ausgang der Vorrichtung (D) vor ihrer Einführung in das Trinkwassernetz (R) des Flugzeugs (A) injiziert wird.

8. Vorrichtung (D) nach Anspruch 1, **dadurch gekennzeichnet, dass** sie ein Modul zur Verbindung (800) an das Trinkwassernetz des Flugzeugs (A) umfasst, ausgestattet mit einem Schieber (810), wobei die Auswahl der Position Folgendes ermöglicht:
- Ablassen des Wassers oder der Flüssigkeit, die sich im Netz (R) des Flugzeugs (A) befindet,
- Stoppen der Injektion von heißer Flüssigkeit, ohne ein Vakuum zu erzeugen,
- Ablassen der Flüssigkeit, die sich bereits in der Vorrichtung (D) befindet, wobei dieses Verbindungsmodul auch Eingangs- (820) und Ausgangsschieber (830) umfasst, ebenso wie eine Temperaturmessvorrichtung (840) und eine Druckmessvorrichtung (850).

9. Vorrichtung (D) nach Anspruch 1, **dadurch gekennzeichnet, dass** sie einen beweglichen Rahmen (C) umfasst, ausgestattet mit dämpfenden Rollen (711).

10. Vorrichtung (D) nach Anspruch 1 und versorgt durch das Hauswassernetz, **dadurch gekennzeichnet, dass** sie ein Modul zur Beschleunigung (900) des Wassers umfasst, das aus dem Hausnetz stammt, um die Geschwindigkeit des Füllens des Netzes (R) des Flugzeugs (A) zu erhöhen.

## Claims

1. Device (D) for cleaning pipes in the drinking-water system (R) of an aircraft (A),
said device (D) being independent of said aircraft (A) and being connected to said system (R) occasionally and being supplied with liquid,
the device comprising a plurality of functional subassemblies necessary for the production of a hot liquid,
as well as a mobile chassis (C) supporting a condensing gas boiler with sealed combustion chamber (110),
said device accommodating several gas bottles (210, 220) proposing a sufficient volume of gas able to supply the energy necessary for the production of a large quantity of heat over a very short period.

2. Device (D) according to claim 1, **characterised by** the fact that it comprises an intermediate gas reservoir (240) positioned between the boiler (110) and the pressure-reducing valve or valves (230) associated with gas bottles, to receive the gas that has just been expanded and to supply the boiler (110).

3. Device (D) according to claim 1, **characterised by** the fact that the boiler (110) heats a liquid in a primary circuit (130) exchanging its heat with a liquid situated in a vessel (410).

4. Device (D) according to claim 1, **characterised by** the fact that the boiler (110) heats a liquid in a primary circuit (130) that exchanges with a secondary circuit (420) in an exchanger (430).

5. Device (D) according to claim 4, **characterised by** the fact that the liquid in the secondary circuit (420) is preheated by means of the liquid in the primary circuit (130) emerging from the exchanger (430).

6. Device (D) according to claim 1, **characterised by** the fact that said boiler (110) is equipped with a dual-flow discharge flue (111).

7. Device (D) according to claim 1, **characterised by** the fact that it comprises a module (540) for metering a treatment product that is injected into the heated liquid discharged from the device (D) before it is introduced into the drinking-water system (R) of the aircraft (A).

8. Device (D) according to claim 1, **characterised by** the fact that it comprises a module (800) for connection to the drinking-water system of the aircraft (A) equipped with a valve (810), selecting the position of which makes it possible:
- to drain the water or liquid present in the system (R) of the aircraft (A),
- to stop the injection of hot liquid without creating an air vacuum,
- to drain the liquid already present in the device (D), this connection module also comprises inlet (820) and outlet (830) valves as well as a temperature gauge (840) and a pressure gauge (850).

9. Device (D) according to claim 1, **characterised by** the fact that it comprises a mobile chassis (C) equipped with damped wheels (711).

10. Device (D) according to claim 1 and supplied by the domestic water system, **characterised by** the fact that it comprises a module (900) for accelerating the water issuing from the domestic system in order to increase the filling speed of the system (R) of the aircraft (A).
